# EUROPÄISCHE PATENTSCHRIFT

(11) **EP 1 861 743 B1**
(45) Veröffentlichungstag und Bekanntmachung des Hinweises auf die Patenterteilung: **09.07.2008**
(21) Anmeldenummer: 06722541.7
(22) Anmeldetag: 02.03.2006
(51) Int. Cl.: G02B 21/08, F21V 19/02, F21V 33/00

(54) **RINGLICHT FÜR EIN OPTISCHES ODER MEDIZINISCHES GERÄT**
ANNULAR LAMP FOR AN OPTICAL OR MEDICAL DEVICE
ECLAIRAGE ANNULAIRE POUR UN APPAREIL OPTIQUE OU MEDICAL

(30) Priorität: 22.03.2005 DE 202005004635 U
(43) Veröffentlichungstag der Anmeldung: 05.12.2007
(73) Patentinhaber: Elmes GmbH, 75181 Pforzheim (DE)
(72) Erfinder: SCHREIBER, Klaus, 75181 Pforzheim (DE)
(74) Vertreter: Geitz Truckenmüller Lucht
(86) Internationale Anmeldenummer: PCT/DE2006/000370
(87) Internationale Veröffentlichungsnummer: WO 2006/099834

(56) Entgegenhaltungen:
- EP-A- 0 458 096
- DE-A1- 19 653 234
- US-A- 4 025 777
- US-A- 4 729 070
- US-A- 5 580 163
- EMLING, R.: "Ein Ringlicht mit 24 LEDs"[Online] 6. September 2003 (2003-09-06), XP002382847 Gefunden im Internet: URL:http://www.emling-online.de/digital/ri nglicht2.html> [gefunden am 2006-05-26]

## Beschreibung

Die Erfindung betrifft eine Beleuchtungsvorrichtung für ein optisches oder medizinisches Gerät, insbesondere ein Auflichtmikroskop.

Derartige Geräte besitzen zumeist ein Objektiv und wenigstens ein Okular, die beide durch einen Tubus unter Ausbildung eines optischen Kanals miteinander verbunden sind, wobei in gedachter Verlängerung der von dem wenigstens einem Okular, dem Tubus und dem Objektiv gebildeten optischen Achse ein zu beleuchtendes Objekt einbringbar ist.

Ein derartiges Mikroskop ist beispielsweise aus der DE 10 2004 015 568 bekannt. Eine alternative Beleuchtungseinrichtung für ein Mikroskop ist aus der DE 198 45 603 A1 bekannt.

Ringlichter sind aus US4729070, US5580163, EP0458096 und DE 196 53224 bekannt.

Ein Mikroskop besteht im Wesentlichen aus zwei optischen Systemen, dem Objektiv und dem Okular, die durch einen Tubus miteinander verbunden sind.
Das durch das Mikroskop zu betrachtende Objekt ist zumeist mit einem Objekttisch gehalten, der in gedachter Verlängerung der von dem Okular, dem Tubus und dem Objektiv gebildeten optischen Achse angeordnet ist. Für beidäugiges Sehen können Mikroskope auch mit zwei Okularen als Bi-Okularmikroskop ausgebildet sein. Das Objektiv liefert, meist in Verbindung mit einer Tubuslinse, ein vergrößertes reelles Zwischenbild des Objektes, das mit dem Okular nochmals vergrößert betrachtet werden kann. Zur Einstellung verschiedener Vergrößerungen können die optischen Systeme ausgetauscht werden.

Je nach Art der Beleuchtung unterscheidet man Durchlichtmikroskope, bei denen dünne, transparente Objekte durchstrahlt werden, und Auflichtmikroskope, zur Untersuchung der Oberfläche undurchsichtiger Körper. Für beide Mikroskope sind verschiedene Beleuchtungsstrahlungsgänge möglich. Für die Güte eines Mikroskops sind dessen Vergrößerung und das Auflösungsvermögen maßgebend. Beide werden nach der Abbe'sche Theorie durch die numerische Apertur A des Objektivs bestimmt, die wiederum vom Öffnungswinkel σ und der Brechzahl n des Mediums zwischen Objekt und Objektiv abhängt.

Die maximale Vergrößerung eines Lichtmikroskops liegt daher zwischen 500 A und 1000 A. Da der kleinste noch zu trennende Abstand zweier Objektpunkte nach E. Abbe größer ist als λ/A kann das Auflösungsvermögen eines Mikroskops durch den Einsatz kleinerer Wellenlängen λ erhöht werden, wie etwa beim Ultraviolettmikroskop.

Bei herkömmlichen Durchlichtmikroskopen ist dem Objekttisch eine Lichtquelle zugeordnet, wobei meist nach einer Umlenkung des Lichtstrahls und Durchtritt durch eine Blendeneinrichtung bzw. einer Kondensorblende oder einer Aperturblende auf das Objekt eingestrahlt werden.

Selbstverständlich sind ähnliche oder alternative Beleuchtungsvorrichtungen bekannt, mit denen das Objekt auch mit einem Auflicht beaufschlagt werden kann. Auflichtmikroskope werden etwa zur Untersuchung der Oberfläche undurchsichtiger Körper eingesetzt. Die DE 10 2004 015 586 A1 zeigt eine Beleuchtungsvorrichtung für ein Mikroskop, bei der die Beleuchtungseinheit über eine Lichtablenkanordnung auf die zu mikroskopierende Probe einwirkt.

Ferner ist es aus dem Stand der Technik bekannt, durch entsprechende Ansteuerung die Lichtstärke zu verändern oder auch den Brennpunkt des durch entsprechende Umlenkeinrichtungen derart zu bewegen, dass eine optimale Ausleuchtung des Objekts und der Probe nach Möglichkeit gegeben ist.

Ausgehend von diesem Stand der Technik liegt der Erfindung die Aufgabe zugrunde, eine verbesserte Beleuchtungsvorrichtung für Mikroskope, insbesondere Auflichtmikroskope, zu schaffen. Die vorteilhafte Ausgestaltung soll dabei auch eine Fokussierung des Brennpunktes des Lichtes gestatten, mithin also eine Veränderung nicht nur der Lage, sondern auch der Größe des Brennpunktes des eingestrahlten Lichtes.

Die Lösung der erfindungsgemäßen Aufgabe gelingt mittels einer Beleuchtungsvorrichtung gemäß Hauptanspruch.
Vorteilhafte Ausgestaltungen der Erfindung sind gemäß den abhängigen Ansprüchen 2 bis 19 gegeben.

Gemäß Hauptanspruch ist dem Tubus des jeweiligen Geräts auf der dem zu beleuchtenden Objekt bzw. der zu beleuchtenden Probe zugewandten Stirnseite ein Beleuchtungsring zugeordnet. Das auf das Objekt oder die Probe einzustrahlende Licht wird also nicht durch eine Umlenkeinrichtung in den optischen Kanal eingeblendet, sondern vielmehr direkt durch den Beleuchtungsring auf das jeweilige Objekt eingestrahlt. Die Besonderheit des Beleuchtungsrings liegt darin, dass die innerhalb des Beleuchtungsrings angeordneten Leuchtelemente derart beweglich gelagert sind, dass das von den um die optische Achse herum angeordneten Leuchtelementen emittierte Licht fokussierbar ist. Hierdurch kann nicht nur eine bessere Ausleuchtung des jeweiligen Objekt bei gleicher Lichtstärke erreicht werden, sondern beispielsweise auch Bohrungen oder Vertiefungen in zu beleuchtenden Objekten gezielt ausgeleuchtet werden.

Die Beleuchtungsvorrichtung kann als zusätzlich oder als alternative Beleuchtungsvorrichtung einfach mittels eines Schraubrings mit dem Tubus verschraubt werden. Um die erfindungsgemäße Lösung für verschiedene Mikroskoptypen, insbesondere verschiedener Hersteller, kompatibel zu halten, könnte der Einsatz von austauschbaren Adapterringen, die zwischen den Schraubring und Adapterring gesetzt werden, sinnvoll sein.

In weiterer vorteilhafter Ausbildung ist der Schraubring von einem Haltering umschlossen, wobei sich der Haltering auf der vom Tubus abgewandten Seite zu einem Lochkranz mit erweiterten Durchmesser erweitert.
Der Lochkranz erlaubt eine definierte Ausrichtung des mit der Beleuchtungsvorrichtung ausgestrahlten Lichts.

Die Beleuchtungsvorrichtung wird auf der von dem Tubus abgewandten Seite von einem drehbeweglichen Stellring abgeschlossen. In vorteilhafter Ausgestaltung kann der Stellring zur Verbesserung der Haptik und einer erleichterten Drehbeweglichkeit zumindest abschnittsweise mit einer profilierten Oberfläche versehen sein.

Die Drehbewegung des Stellrings relativ zum innenliegenden und feststehenden Haltering wird in eine translatorische Bewegung entlang der optischen Achse des Geräts, konkret in eine Höhenverstellung eines Mitnehmerrings, der einen mit dem Stellring drehfest verbundenen Innenzylinder konzentrisch umschließt, umgesetzt.

Der Mitnehmerring ist mit wenigstens einer Fräsnut versehen, die im Wesentlichen einen Gewindegang mit einer definierten Steigung ausbildet. Bei bestimmungsgemäßer Montage werden die Fräsnuten jeweils von einem radial nach außen weisenden Stift durchgriffen, der seinerseits mit einem Innenzylinder des Stellrings fest verbunden ist. Durch eine Drehbewegung des Stellrings und damit auch der Stifte wird aufgrund der als Gewindegang mit einer Gewindesteigung versehenen Fräsnuten eine Höhenverstellung des Mitnehmerrings relativ zum feststehenden Lochkranz bewirkt.

Zwischen dem Mitnehmerring und dem Haltering sind wenigstens zwei Trägerlaschen mit jeweils einem eingesteckten Leuchtelement eingelegt.

Die Trägerlasche sind dabei jeweils über einen Steckstift jeweils in ein Steckloch eines Lochrings des höhenverstellbaren Mitnehmerrings eingesteckt. Auf der anderen Seite liegt die Trägerlasche auf einem feststehenden Ringflansch der mit dem ebenfalls feststehenden Haltering verbunden ist, auf. Hierdurch bewirkt die Höhenverstellung des Mitnehmerrings zugleich eine Verstellung des Anstellwinkels der Trägerlasche und damit des jeweils eingesteckten Leuchtelements relativ zur zentrischen optischen Achse des jeweils entsprechend ausgestatteten Geräts.

Die Stromversorgung der in den Trägerlaschen eingesteckten Leuchtelemente erfolgt über eine, vorzugsweise als Folienring ausgebildete Ringplatine, die in eine Ringnut des mit dem Haltering verbunden Ringflanschs eingelegt ist. Durch die Anordnung der Ringplatine in einer Ringnut ist diese sicher an der vorbestimmten Stelle aufgenommen. Die sachgemäße Montage der Ringplatine ist hierdurch wesentlich erleichtert.

Durch die Verstellung des Anstellwinkels der Trägerlaschen werden bestimmungsgemäß die mit den Trägerlaschen gehaltenen Leuchtelemente ebenfalls verschwenkt, so dass die zumindest teilweise von den Leuchtelementen durchgriffenen Löcher des Lochkranzes derart zu dimensionieren sind, dass sie die bestimmungsgemäße Verschwenkbarkeit der Leuchtelemente zum Zwecke der Fokussierung nicht hindern.

Die Beleuchtungsvorrichtung ist oberseitig von einer Haube abgeschlossen.

Idealerweise ist die Haube mit wenigstens einer Durchführung zur Stromversorgung der innenliegenden Leuchtelemente versehen. Weitere Durchführungen können etwa zum Anschluss von Schaltelementen, also in einfachster Weise eines An/Aus-Schalters für die Beleuchtungsvorrichtung vorgesehen sein.

Im Zusammenhang mit der Stromzuführung hat es sich bewährt wenn im Bereich eines Übergangkonus des Stellrings ein Langloch zur Durchführung der Stromversorgung zu der innenliegenden Ringplatine vorgesehen ist. Dabei ist die Länge des Langlochs und die Länge der Stromzuleitungen aufeinander abgestimmt.

In vorteilhafter Ausgestaltung sind die erwähnten Trägerlaschen jeweils mit LED's bestückt. LED's haben den Vorteil einer vergleichsweise hohen Helligkeit bei vergleichsweise geringem Energie- bzw. Strombedarf. Darüber hinaus haben sich LED's im Vergleich zu anderen Leuchtmitteln als erheblich langlebiger und robuster erwiesen.

In abermals vorteilhafter Weiterbildung sind über den Umfang verteilt konzentrisch zur optischen Achse verschiedenfarbene LED, vorzugsweise weiße und gelbe LED's, angeordnet. Je nach Zuschaltung einzelner oder mehrerer LED's kann somit die Lichtfarbe des eingestrahlten Lichtes verändert werden. Die Veränderung der Lichtfarbe ist wiederum zur optischen Überprüfung von Legierungen bzw. Legierungsübergängen von zu prüfenden Objekten von Interesse.

In weiterer vorteilhafter Ausgestaltung werden die LED's, die zwar mechanisch eher robust, aber thermisch sehr empfindlich sind, nicht verlötet, sondern lediglich mittels Steckkontakten in der Ringplatine befestigt und zur Verbesserung ihrer Befestigung allenfalls verklebt.

Aufgrund der thermischen Empfindlichkeit von LED's, müssen die im Rahmen der Beleuchtungsvorrichtung eingesetzten LED's extrem niederstromig betrieben werden. Anstelle des Betriebs mit maximal zulässiger Stromstärke innerhalb derartiger LED's, werden die LED's im Rahmen der Erfindung mit maximal der halben zulässigen Stromstärke betrieben und die erforderliche Lichtstärke statt dessen durch Fokussierung oder die Anzahl der eingesetzten LED's erreicht. Insbesondere die Abwärme der LED's ist aufgrund dieses niederstromigen Betriebs soweit reduziert, dass eine thermische Beeinträchtigung der jeweiligen Nachbar-LED's ausgeschlossen erscheint.

In abermals vorteilhafter Ausgestaltung ist der Ringplatine eine Steuereinheit zugeordnet oder auf der Ringplatine bereits angeordnet. Mittels der Steuereinheit kann die Lichtfarbe und Lichtintensität, insbesondere in Abhängigkeit von den Vorgaben eines Bedienelementes verändert werden. Durch die Steuereinheit wird also der Anwendungsbereich der vorstehend beschriebenen mikroskopischen Einrichtung vergrößert.

In einer besonders hochwertigen Ausführung kann dem Stellring ein elektromotorischer Antrieb zugeordnet sein, um eine motorisch angetriebene Fokussierung des eingestrahlten Lichtes zu ermöglichen.

Die Erfindung wird nachstehend anhand eines in der Zeichnung nur schematisch und nicht maßstäblich dargestellten Ausführungsbeispiels näher erläutert.

Es zeigen:
- Fig. 1:: eine Beleuchtungsvorrichtung für ein Mikroskop in perspektivischer Darstellung,
- Fig. 2:: die in Fig. 1 gezeigte Beleuchtungsvorrichtung im Querschnitt,
- Fig. 3:: eine Haube zur oberseitigen Abdeckung der in den Fig. 1 und 2 gezeigten Beleuchtungsvorrichtung in perspektivischer Darstellung
- Fig. 4:: einen Mitnehmerring der Beleuchtungsvorrichtung in perspektivischer Darstellung,
- Fig. 5:: einen Stellring der Beleuchtungsvorrichtung in perspektivischer Darstellung,
- Fig. 6:: einen abgesetzten Schraubring der Beleuchtungsvorrichtung in perspektivischer Darstellung,
- Fig. 7:: einen Haltering der Beleuchtungsvorrichtung im Querschnitt,
- Fig. 8:: eine Detailansicht des Übergangs des in Fig. 7 dargestellten Halterings zum Lochkranz und
- Fig. 9: eine Trägerlasche zur Steckhalterung der Leuchtelemente der Beleuchtungsvorrichtung in perspektivischer Darstellung.

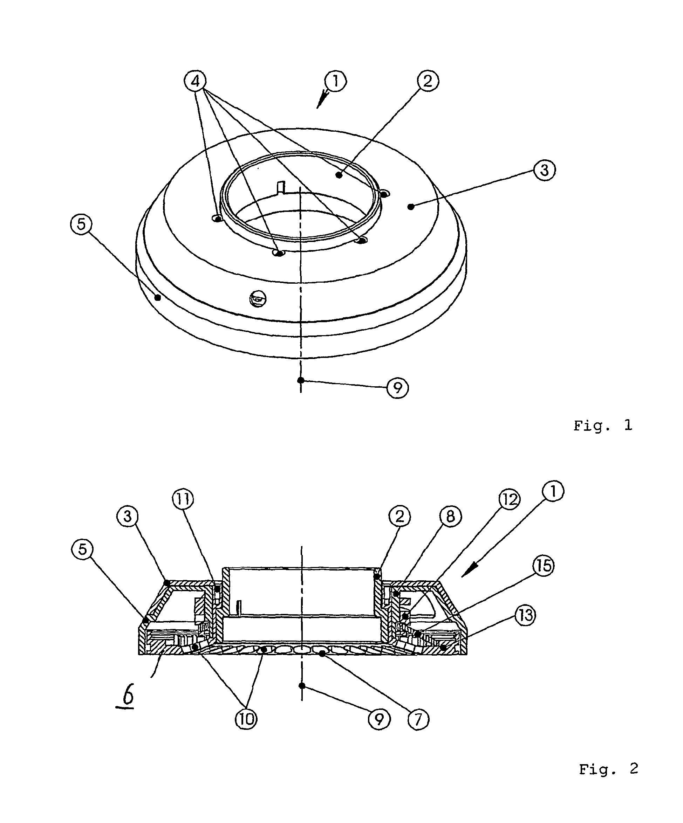

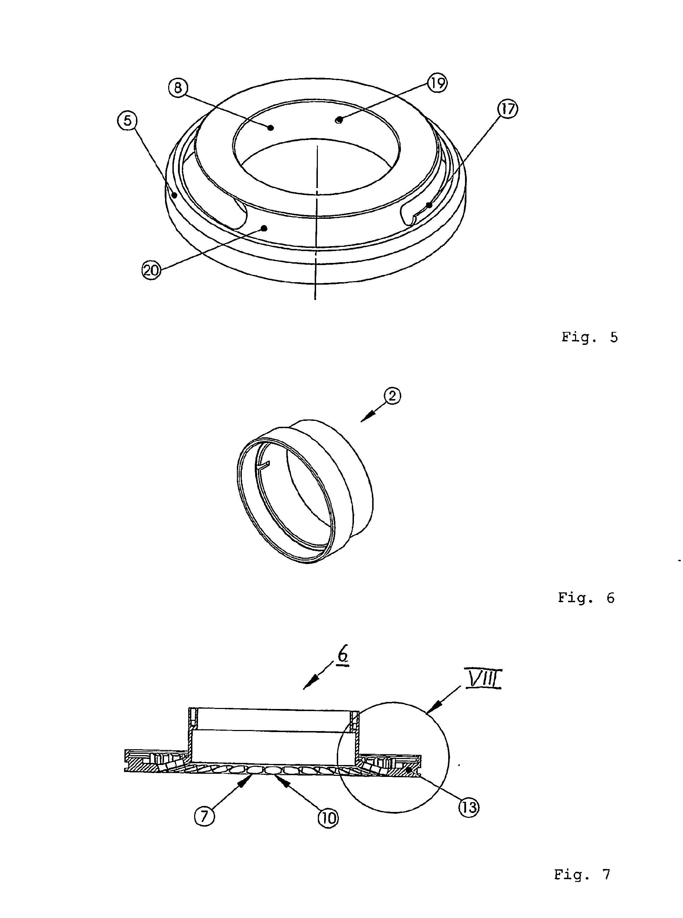

Gemäß der Darstellung in Figur 1 stellt die Beleuchtungsvorrichtung 1 im Wesentlichen einen Aufsatz für ein in der Zeichnung nicht weiter dargestelltes optisches oder medizinisches Gerät, etwa ein Auflichtmikroskop dar, das auf der einem zu beleuchtenden Objekt zugewandten Seite mit einem Tubus eines Mikroskops mittels eines in Figur 6 detaillierter dargestellten Schraubrings 2 verschraubt werden kann. Die Beleuchtungsvorrichtung 1 kann demnach gegebenenfalls unter Zwischenlage eines geeigneten Adapters mit unterschiedlichen Gerätetypen derart verschraubt werden, dass der vom Okular über den Tubus zum Objektiv hin gebildete optische Kanal durch den von dem Schraubring 2 gebildeten Hohlzylinder fortgesetzt wird. Der optische Kanal 9 verlauft üblicherweise gemäß der strichpunktierten Darstellung als Zentralachse durch die Beleuchtungsvorrichtung 1.

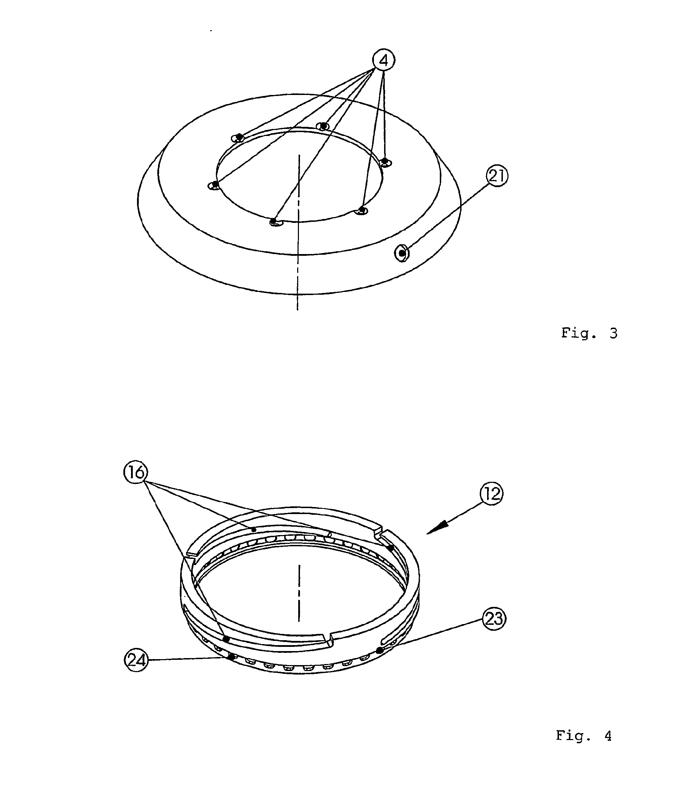

Die Beleuchtungsvorrichtung 1 wird dabei oberseitig, d. h. auf der ggf. einem Tubus zugewandten Seite, von einer Haube 3 übergriffen, die detaillierter in Figur 3 dargestellt ist. Wie jedoch schon aus Figur 1 ersichtlich, ist die Haube 3 an ihrer dem Tubus zugewandten Oberfläche mit Schraublöchern 4 zur Ausbildung einer Schraubverbindung versehen. Unterseitig, d. h. auf der dem Objektiv zugewandten Seite, wird die Beleuchtungsvorrichtung 1 umseitig von einem Stellring 5 abgeschlossen.

Gemäß der Querschnittsdarstellung in Figur 2 umschließt der Stellring 5 außenseitig einen den Schraubring 2 konzentrisch umschließenden Haltering 6, der sich unterseitig, d. h. in Richtung des zu beleuchtenden Objektes, zu einem Lochkranz 7 mit einem erweitertem Außendurchmesser erweitert. Der Lochkranz 7 weist, wie der Name richtigerweise sagt, eine Vielzahl von über den Umfang des Lochkranzes 7 verteilt angeordneten Löchern 10 auf.. Die Löcher 10 können gegebenenfalls mit einer transparenten Abdeckung versehen sein. Der Lochkranz 7 geht an seinem Außenumfang in einen fest mit dem Lochkranz 7 und damit auch dem Haltering 6 verbundenen Ringflansch 13 über.

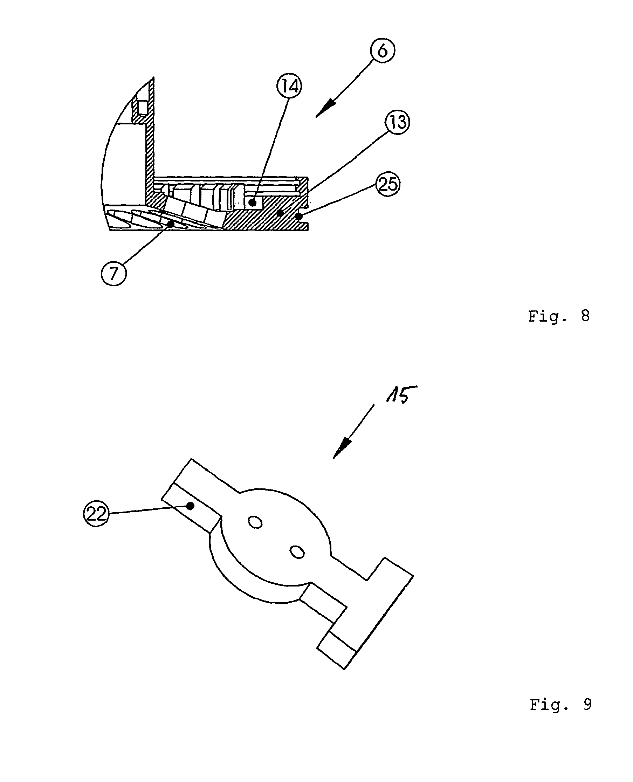

Ebenfalls aus Figur 2 gut ersichtlich ist, dass die als oberseitige Abdeckung der Beleuchtungsvorrichtung 1 dienende Haube 3 über in den Bohrungen 4 angeordnete Schrauben 11 mit dem Vollmaterial des Halterings 6 verschraubt ist. Der Haltering 6 ist oberhalb des Lochkranzes 7 zusätzlich von einem Mitnehmerring 12 konzentrisch umschlossen. Der Mitnehmerring 12 ist detailliert in perspektivischer Darstellung in Figur 4 gezeigt, während der Haltering 6 mit Lochkranz 7 detailliert in den Figuren 7 und 8 gezeigt ist.

Der gegenüber dem Haltering 6 und dem mit diesem Haltering fest verbundene Ringflansch 13 drehbewegliche Stellring 5 schließt einen innenliegenden. gleichfalls drehbeweglichen Innenzylinder 8 ein, der zwischen dem Haltering 6 und dem Mitnehmerring 12 angeordnet ist.

Gemäß der detaillierten Darstellung in den Figuren 7 und 8 ist der Lochkranz 7 außenseitig von einem Ringflansch 13 umschlossen, der eine Absatzstufe 14 ausbildet. Im Bereich dieser Absatzstufe 14 ist eine Ringnut eingearbeitet, in die die mit den Leuchtelementen der Beleuchtungsvorrichtung 1 bestückten Trägerlaschen 15 eingelegt werden können, wie nachstehend noch näher erläutert werden wird. Die Leuchtelemente sind jeweils in eine in Fig. 9 detaillierter dargestellte Trägerlasche 15 gesteckt, wobei die Trägerlasche 15 jeweils beweglich, aber drehgesichert, zwischen dem Mitnehmerring 12 und dem Ringflansch 13 gelagert ist. Die Trägerlaschen 15 sind dabei über den Umfang des Mitnehmerrings 12 konzentrisch um die optische Achse 9 angeordnet und wahlweise mit weißen und/oder gelben LED's bestückt. Die LED's sind nicht verlötet, sondern nur gesteckt und allenfalls zur zusätzlichen Sicherung verklebt. Die LED's sind dabei in Figur 2 nicht weiter dargestellt.

Die Haube 3 wird gemäß Fig. 3 über Schraubverbindungen 4 mit dem darunter angeordneten Haltering drehfest verschraubt. Um die in der Beleuchtungsvorrichtung 1 angeordneten Leuchtelemente mit Strom versorgen zu können, weist die Haube 3 eine Durchführung 21 auf.

Der bereits erwähnte Mitnehmerring 12 ist in Fig. 4 ausführlich gezeigt. Gemäß der Darstellung in Figur 4 ist der Mitnehmerring 12 mit mehreren Fräsnuten 16 versehen, die im Wesentlichen Gewindegänge mit einer definierten Steigung ausbilden. In die Fräsnuten 16 des Mitnehmerrings 12 greift im eingebauten Zustand jeweils ein Stift 19 ein, der radial nach außen weisend mit dem drehbeweglichen Innenzylinder 8 des Stellrings 5 verbunden ist. Die Drehbewegung des Stellrings 5 und des damit drehfest verbunden Innenzylinders 8 und die hierdurch bewirkte Bewegung der Stifte 19 in den Fräsnuten 16 des Mitnehmerrings 12 bewirken dessen axiale Verschiebung relativ zum Haltering 6 und damit auch gegenüber dem Lochkranz 7 und dem sich außenseitig anschließenden Ringflansch 13.

Die rotatorische Drehbewegung des Stellrings 5 ist damit in eine translatorische Bewegung des Mitnehmerrings 12 entlang der optischen Achse 9 des Systems umgesetzt. Konkret wird hierdurch der Anstellwinkel der zwischen dem Mitnehmerring 12 und dem Ringflansch 13 aufgelagerten Trägerlaschen 18 relativ zur zentralen optischen Achse 9 des Systems verstellt.

Hierzu weist der Mitnehmerring 12 gemäß Fig. 4 unterseitig einen Lochkranz 24 mit Stecklöchern 23 auf, in die vorspringende Steckstifte 22 der Trägerlaschen 18 eingesteckt werden können. Hierdurch verändert sich mit der erwähnten Höhenverstellung des Mitnehmerrings 12 auch der jeweilige Einstrahlwinkel der in den Trägerlaschen 18 eingesteckten Leuchtelemente relativ zur optischen Achse 9.

Hierdurch wird eine Fokussierung des durch den Lochkranz 7. emittierten Lichtes bewirkt bzw. der Brennpunkt des durch den Lochkranz 7 emittierten Lichtes vergrößert oder verkleinert.

Die konkrete Ausgestaltung des Stellrings 5 ist in Fig. 5 dargestellt. Dabei weist der Stellring 5 einen Übergangskonus 20 auf, in dessen Verlauf sich der Stellring 5 zu dem Innenzylinder 8 mit den radial nach außen weisende Stiften 19 verjüngt. Im Bereich des Übergangskonus 20 sind mehrere Langlöcher 17 zur weiteren Stromzuführung nach innen eingearbeitet.

Gemäß Figur 6 kann die Beleuchtungsvorrichtung 1 unter Zwischenlage eines abgesetzten Schraubrings 2 mit einem Innen- und einen Außengewinde mit unterschiedlichsten Geräten unterschiedlichen Durchmesser verschraubt werden.

Die konkrete Gestaltung des Halterings 6, der sich unterseitig zu einem Lochkranz 7 mit über den Umfang verteilten Löchern 10 erweitert und schließlich insgesamt von einem Ringflansch 13 umgriffen ist kann Fig. 7 entnommen werden.

Gemäß der Detaildarstellung in Fig. 8 ist in den Ringflansch 13 ein Absatz 14 eingearbeitet, an dem sich die beweglich gelagerte Trägerlaschen 15 abstützen. In eine weitere, hier nicht dargestellte Ringnut ist und auch der Folienring zur Ausbildung einer Ringplatine eingelegt, um für die Stromversorgung der in die Trägerlaschen 18 eingesteckten Leuchtelemente zu sorgen. Außerdem weist der Ringflansch 13 eine umlaufende Aussennut 25 zur Zwischenlage eines O-Rings auf, der die Drehbewegung des drehbeweglich mit dem Haltering 6 verbundenen Stellrings 5 bestimmungsgemäß hemmt.

Fig. 9 zeigt die konkrete Ausgestaltung einer zwischen Mitnehmerring 12 und Ringflansch 13 einzulegenden bzw. einzusteckenden Trägerlasche 15 mit dem in Richtung des Steckloch 23 des Mitnehmerrings 12 vorspringenden Steckers 22.

Vorstehend ist somit eine Beleuchtungsvorrichtung 1 als zusätzliche oder alternative Beleuchtungseinheit für ein optisches oder medizinisches Gerät, insbesondere für ein Auflichtmikroskop, beschrieben, die in vorteilhafter Weise mit einer ein- oder mehrfarbigen LED-Bestückung arbeitet, wobei der von der Beleuchtungsvorrichtung 1 ausgebildete Brennpunkt durch einfaches Drehen eines Stellrings 5 relativ zur optischen Achse verändert werden kann. Durch die Vergrößerung bzw. Verkleinerung des Brennpunktes ist es beispielsweise möglich, das auf ein Objekt eingestrahlte Licht soweit zu fokussieren, dass etwa Bohrungen ausgeleuchtet werden können. Durch die Anordnung von mehreren gegebenenfalls farbunterschiedlichen LED's in der Beleuchtungsvorrichtung 1 kann die Lichtfarbe des eingestrahlten Lichtes verändert werden und somit beispielsweise Übergänge im Bereich von Legierungen detektiert werden.

### BEZUGSZEICHENLISTE

- 1: Beleuchtungsvorrichtung
- 2: Schraubring
- 3: Haube
- 4: Schraubloch
- 5: Stellring
- 6: Haltering
- 7: Lochkranz
- 8: Innenzylinder
- 9: optische Achse
- 10: Loch
- 11: Schraube
- 12: Mitnehmerring
- 13: Ringflansch
- 14: Absatz
- 15: Trägerlasche
- 16: Fräsnut
- 17: Langloch
- 19: Stift
- 20: Übergangskonus
- 21: Durchführung
- 22: Steckstift
- 23: Steckloch
- 24: Lochkranz
- 25: Aussennut

## Patentansprüche

1. Beleuchtungsvorrichtung für ein optisches oder medizinisches Gerät, insbesondere ein Auflichtmikroskop, mit einem Tubus zur Ausbildung eines optischen Kanals mit einer vorzugsweise zentrischen optischen Achse (9), wobei in gedachter Verlängerung dieses optischen Kanals beabstandet ein zu prüfendes Objekt angeordnet ist und auf der dem Objekt zugewandten Stirnseite des Tubus ein Beleuchtungsring mit wenigstens zwei über den Umfang verteilten beweglich gelagerten Leuchtelementen zur, vorzugsweise zusätzlichen, Beleuchtung des Objekts angeordnet sind, wobei der Anstellwinkel der Leuchtelemente relativ zur optischen Achse im Sinne einer Fokussierung der Beleuchtung durch eine Verstellung eines Mitnehmerrings (12) gegen einen Haltering (6) verstellbar ist, **dadurch gekennzeichnet, dass** zwischen dem Mitnehmerring (12) und dem Haltering (6) wenigstens zwei Trägerlaschen (15) mit je einem eingesteckten Leuchtelement eingelegt sind, wobei ein in Richtung des Mitnehmerrings (12) vorspringender Steckstift (22) der Trägerlasche (15) jeweils in ein Steckloch (23) des Mitnehmerrings (12) eingreift und die Stecklöcher (23) über den Umfang eines den Mitnehmerring (12) unterseitig, mithin in Richtung des zu beleuchtenden Objekts, abschließenden Lochrings (24) des Mitnehmerrings (12) angeordnet sind.

2. Beleuchtungsvorrichtung nach Anspruch 1, **dadurch gekennzeichnet, dass** die Beleuchtungsvorrichtung (1) mittels eines, vorzugsweise abgesetzten, Schraubrings (2) mit einem entsprechenden Außengewinde mit dem Tubus verschraubt ist.

3. Beleuchtungsvorrichtung nach Anspruch 1 oder 2, **dadurch gekennzeichnet, dass** der Schraubring (2) unter Zwischenlage eines austauschbaren Adapterrings, vorzugsweise über ein Innen- und ein Außengewinde, mit dem Tubus des Geräts befestigt ist.

4. Beleuchtungsvorrichtung nach einem der vorhergehenden Ansprüche, **dadurch gekennzeichnet, dass** der Schraubring (2) von dem Haltering (6) konzentrisch umschlossen ist, der auf der vom Tubus des Mikroskops abgewandten Seite von einem Lochkranz (7) mit einem erweiterten Außendurchmesser derart abgeschlossen ist, dass der vom Schraubring (2) umschlossene Innendurchmesser von diesem Lochkranz (7) umgriffen ist.

5. Beleuchtungsvorrichtung nach Anspruch 4, **dadurch gekennzeichnet, dass** der Haltering (6) mit dem Lochkranz (7) außenseitig auf der dem Objekt zugewandten Seite von einem drehbeweglichen Stellring (5), der vorzugsweise mit einer profilierten Oberfläche versehen ist, konzentrisch umgriffen ist, der die Beleuchtungsvorrichtung (1) außenseitig auf der vom Tubus abgewandten Seite, mithin in Richtung des zu beleuchtenden Objekts unterseitig abschließt.

6. Beleuchtungsvorrichtung nach Anspruch 5, **dadurch gekennzeichnet** das die rotatorische Bewegung des Stellrings (5) relativ zum feststehenden Haltering (6) in eine translatorische Bewegung - entlang der optischen Achse des Geräts - des Mitnehmerrings (12) umgesetzt wird, wobei der Mitnehmerring (12) einen mit dem Stellring (5) drehfest verbundenen Innenzylinder (8) konzentrisch umschließt, der seinerseits den Haltering (6) einfasst.

7. Beleuchtungsvorrichtung nach Anspruch 6, **dadurch gekennzeichnet, dass** der Innenzylinder (8) des Stellring (5) wenigstens einen radial nach außen weisenden Stift (19) aufweist und der Mitnehmerring (12) wenigstens eine unter Ausbildung eines Gewindegangs verlaufende Fräsnut (16) besitzt, wobei diese Fräsnuten (16) jeweils von den radial nach außen weisenden Stiften (19) derart durchgriffen werden, dass mittels einer Drehbewegung des Stellrings (5) relativ zum mit dem feststehenden Haltering (6) festverbundenen Lochkranz (7) eine Höhenverstellung des Mitnehmerrings (12) relativ zum feststehenden Lochkranz (7) bewirkt wird.

8. Beleuchtungsvorrichtung nach einem der vorhergehenden Ansprüche, **dadurch gekennzeichnet, dass** die Spannungsversorgung der in den Trägerlaschen (15) jeweils einsteckten Leuchtelemente über eine, vorzugsweise als Folienring ausgebildete, Ringplatine erfolgt, die in eine einen Umfangkreis um die Trägerlaschen (15) beschreibende Ringnut des Halterings (6) eingelegt ist.

9. Beleuchtungsvorrichtung nach einem der Ansprüche 6-8, **dadurch gekennzeichnet, dass** die in die Trägerlasche (18) eingesteckten Leuchtelemente die optische Achse (9) des Geräts konzentrisch umschließen und dabei den Lochkranz (7) zumindest teilweise durchdringen und die Löcher (10)des Lochkranzes (7) derart dimensioniert sind, dass die durch die Höhenverstellung des Mitnehmerrings (12) bewirkte Verstellung des Anstellwinkels der Leuchtelemente relativ zur optischen Achse und Verkippung der Leuchtelemente innerhalb der Löcher (10) des Lochkranzes (7) ermöglicht ist.

10. Beleuchtungsvorrichtung nach einem der vorhergehenden Ansprüche, **dadurch gekennzeichnet, dass** der Haltering (6) auf der dem Tubus zugewandten Seite von einer Haube (3) übergriffen ist, wobei die Haube (3) die Beleuchtungsvorrichtung (1) außenseitig auf der dem Tubus zugewandten Seite abschließt.

11. Beleuchtungsvorrichtung nach Anspruch 10, **dadurch gekennzeichnet, dass** die Haube (3) mittels wenigstens einer Schraubverbindung mit dem Haltering (6) lösbar verbunden ist.

12. Beleuchtungsvorrichtung nach Anspruch 10 oder 11, **dadurch gekennzeichnet, dass** die Haube (3) wenigstens eine Durchführung (21) für einen Stromanschluss der innen liegenden Ringplatine und oder der Anordnung eines ebenfalls mit der Ringplatine verbundenen Schaltelements aufweist.

13. Beleuchtungsvorrichtung nach einem der vorhergehenden Ansprüche 6 bis 12, **dadurch gekennzeichnet, dass** der Stellring im Bereich eines Übergangskonus (20) zum Innenzylinder (8) mit einem Langloch (17) versehen ist, wobei die Länge des Langlochs (17) und die Länge der Stromzuführung für die Ringplatine derart bemessen sind, dass aufgrund der Drehbewegung des Stellrings (5) eine Unterbrechung der Stromzufuhr zur innenliegenden Ringplatine ausgeschlossen ist

14. Beleuchtungsvorrichtung nach einem oder mehreren der vorhergehenden Ansprüche, **dadurch gekennzeichnet, dass** in die Trägerlaschen (15) als Leuchtelemente, vorzugsweise weiße und/oder gelbe LED's eingesteckt sind.

15. Beleuchtungsvorrichtung nach Anspruch 14, **dadurch gekennzeichnet, dass** die LED's jeweils mittels, vorzugsweise verklebter, Steckverbindungen befestigt sind.

16. Beleuchtungsvorrichtung nach Anspruch 14 oder 15, **dadurch gekennzeichnet, dass** den Leuchtelementen ein Steuerelement zugeordnet ist und/oder auf der Ringplatine angeordnet ist, wobei dieses Steuerelement die LED's ansteuert und über das Steuerelement durch Veränderung der Stromstärke und/oder Zu- und Abschaltung ausgewählter LED's die Farbe und Stärke des mittels der Beleuchtungsvorrichtung (1) emittierten Lichts steuer- und/oder regelbar ist.

17. Beleuchtungsvorrichtung nach einem der Ansprüche 14 bis 16,
**dadurch gekennzeichnet, dass** die LED's mit einem Bruchteil der max. zulässigen Stromstärke betrieben werden.

18. Beleuchtungsvorrichtung nach einem oder mehreren der vorhergehenden Ansprüche, **dadurch gekennzeichnet, dass** der Beleuchtungsvorrichtung (1) ein auf den Stellring (5) einwirkender elektromotorischer Antrieb zur motorischen Fokussierung des auf das Objekt eingestrahlten Lichtes zugeordnet ist.

## Claims

1. Lighting device for an optical or medical apparatus, particularly a reflected light microscope, with a tubus for formation of an optical channel with a preferably central optical axis (9), wherein an object to be examined is arranged at a spacing in notional prolongation of this optical channel and a lighting ring with at least two lighting elements, which are distributed over the circumference and movably mounted, for, preferably additional, illumination of the object is arranged on the end face of the tubus facing the object, wherein the angle of incidence of the lighting elements relative to the optical axis is adjustable in the sense of focussing of the illumination by adjustment of an entraining ring (12) relative to a holding ring (6), **characterised in that** at least two carrier straps (15) each with a respective plugged-in lighting element are inserted between the entraining ring (12) and the holding ring (6), wherein a plug pin (22), which protrudes in the direction of the entraining ring (12), of the carrier strap (15) engages in a respective plug hole (23) of the entraining ring (12) and the plug holes (23) are arranged over the circumference of an apertured ring (24), which closes off the entraining ring (12) at the underside and therefore in the direction of the object to be illuminated, of the entraining ring (12).

2. Lighting device according to claim 1, **characterised in that** the lighting device (1) is screw-connected by means of a screw ring (2), which is preferably stepped, with the tubus by a corresponding external thread.

3. Lighting device according to claim 1 or 2, **characterised in that** the screw ring (2) is fastened to the tubus of the apparatus with interposition of an exchangeable adapter ring, preferably by way of an internal thread and an external thread.

4. Lighting device according to any one of the preceding claims, **characterised in that** the screw ring (2) is concentrically surrounded by the holding ring (6), which on the side remote from the tubus of the microscope is terminated by an apertured collar (7) with an enlarged outer diameter in such a manner that the inner diameter, which is surrounded by the screw ring (2), is engaged around by this apertured collar (7).

5. Lighting device according to claim 4, **characterised in that** the holding ring (6) together with the apertured collar (7) is at the outside concentrically engaged around on the side facing the object by a rotationally movable setting ring (5) which is preferably provided with a profiled surface and which at the outside terminates the lighting device (1) on the side remote from the tubus and therefore at the underside in the direction of the object to be illuminated.

6. Lighting device according to claim 5, **characterised in that** the rotational movement of the setting ring (5) relative to the stationary holding ring (6) is converted into a translational movement of the entraining ring (12) along the optical axis of the apparatus, wherein the entraining ring (12) concentrically surrounds an inner cylinder (8) which is connected with the setting ring (5) to be secure against rotation relative thereto and which in turn borders the holding ring (6).

7. Lighting device according to claim 6, **characterised in that** the inner cylinder (8) of the setting ring (5) has a substantially radially outwardly pointing pin (19) and the entraining ring (12) has at least one milled groove (16) extending with formation of a thread, wherein these milled grooves (16) are respectively engaged through by the radially outwardly pointing pins (19) in such a manner that by means of a rotational movement of the setting ring (5) relative to the apertured collar (7) fixedly connected with the stationary holding ring (6) a height adjustment of the entraining ring (12) relative to the stationary apertured collar (7) is produced.

8. Lighting device according to any one of the preceding claims, **characterised in that** the voltage supply of the lighting elements respectively plugged into the carrier straps (15) is effected by way of an annular plate which is preferably constructed as a foil ring and which is inserted into an annular groove, which describes a circumferential circle around the carrier straps (15), of the holding ring (16).

9. Lighting device according to any one of claims 6 to 8, **characterised in that** the lighting elements plugged into the carrier strap (18) concentrically surround the optical axis (9) of the apparatus and **in that** case at least partly penetrate the apertured collar (7) and the holes (10) of the apertured collar (7) are dimensioned in such a manner that the adjustment, which is produced by the height adjustment of the entraining ring (12), of the angle of incidence of the lighting elements relative to the optical axis and tipping of the lighting elements within the apertures (10) of the apertured collar (7) is made possible.

10. Lighting device according to any one of the preceding claims, **characterised in that** the holding ring (6) is engaged over on the side facing the tubus by a hood (3), wherein the hood (3) at the outside closes off the lighting device (1) on the side facing the tubus.

11. Lighting device according to claim 10, **characterised in that** the hood (3) is detachably connected with the holding ring (6) by means of at least one screw connection.

12. Lighting device according to claim 10 or 11, **characterised in that** the hood (3) has at least one passage (21) for a power connection of the internally disposed annular plate and/or the arrangement of a switching element similarly connected with the annular plate.

13. Lighting device according to any one of the preceding claims 6 to 12, **characterised in that** the setting ring is provided in the region of a transition cone (20) to an inner cylinder (8) with a slot (17), wherein the length of the slot (17) and the length of the power feed for the annular plate are dimensioned in such a manner that an interruption of the power feed to the internally disposed annular plate due to the rotational movement of the setting ring (5) is excluded.

14. Lighting device according to one or more of the preceding claims, **characterised in that** light-emitting diodes, which are preferably white and/or yellow, are plugged into the carrier straps (15) as lighting elements.

15. Lighting device according to claim 14, **characterised in that** the light-emitting diodes are respectively fastened by means of plug connections, which are preferably glued.

16. Lighting device according to claim 14 or 15, **characterised in that** a control element is associated with the lighting elements and/or is arranged on the annular plate, wherein this control element controls the light-emitting diodes in drive and the colour and intensity of the light, which is emitted by means of the lighting device (1), is controllable and/or regulable by way of the control element by changing the current intensity and/or switching-on and switching-off of selected light-emitting diodes.

17. Lighting device according to any one of claims 14 to 16, **characterised in that** the light-emitting diodes are operated at a fraction of the maximum permissible current intensity.

18. Lighting device according to one or more of the preceding claims, **characterised in that** an electric-motorised drive, which acts on the setting ring (5), for motorised focussing of the light irradiating the object is associated with the lighting device (1).

## Revendications

1. Dispositif d'éclairage pour un appareil optique ou médical, en particulier un microscope à éclairage incident, comprenant un tube pour la réalisation d'un canal optique avec un axe (9) optique, de préférence centré, un objet à examiner étant disposé dans le prolongement imaginaire de ce canal optique et une bague d'éclairage avec au moins deux éléments lumineux montés de façon mobile et répartis sur le pourtour pour l'éclairage, de préférence supplémentaire, de l'objet, étant disposés sur la face avant, opposés à l'objet, du tube, l'angle d'attaque des éléments lumineux par rapport à l'axe optique pouvant être réalisé dans le sens d'une concentration de l'éclairage par un déplacement d'une bague d'entraînement (12) vers une bague de retenue (6),
**caractérisé en ce que** entre la bague d'entraînement (12) et la bague de retenue (6) sont insérées au moins deux pattes support (15) présentant chacune un élément lumineux emboîté, une broche d'enfichage (22), dépassant en direction de la bague d'entraînement (12), de la patte support (15) s'engageant respectivement dans un trou d'emboîtement (23) de la bague d'entraînement (12) et les trous d'emboîtement (23) étant disposés sur le pourtour d'une bague trouée (24), fermant la bague d'entraînement (12) côté inférieur, donc en direction de l'objet à éclairer, de la bague d'entraînement (12).

2. Dispositif d'éclairage selon la revendication 1, **caractérisé en ce que** le dispositif d'éclairage (1) est vissé au moyen d'une bague filetée (2), de préférence décalée, avec un filetage extérieur approprié avec le tube.

3. Dispositif d'éclairage selon la revendication 1 ou 2, **caractérisé en ce que** la bague filetée (2) est fixée avec le tube de l'appareil avec l'intercalation d'une bague d'adaptation amovible, de préférence au moyen d'un filetage intérieur et d'un filetage extérieur.

4. Dispositif d'éclairage selon l'une quelconque des revendications précédentes, **caractérisé en ce que** la bague filetée (2) est entourée de façon concentrique par une bague de retenue (6), laquelle est fermée sur le côté, opposé au tube du microscope, par une couronne perforée (7) avec un diamètre extérieur élargi de telle sorte que le diamètre intérieur entouré par la bague filetée (2) est enveloppé par cette couronne perforée (7).

5. Dispositif d'éclairage selon la revendication 4, **caractérisé en ce que** la bague de retenue (6) est enveloppée de façon concentrique avec la couronne perforée (7) côté extérieur sur le côté opposé à l'objet par une bague de réglage (5) mobile en rotation, qui est réalisée de préférence d'une surface profilée, laquelle bague termine côté inférieur le dispositif d'éclairage (1) côté extérieur sur le côté opposé au tube, donc en direction de l'objet à éclairer.

6. Dispositif d'éclairage selon la revendication 5, **caractérisé en ce que** le mouvement de rotation de la bague de réglage (5) par rapport à la bague de retenue (6) fixe est converti en un mouvement de translation - le long de l'axe optique de l'appareil - de la bague d'entraînement (12), la bague d'entraînement (12) entourant de façon concentrique un cylindre intérieur (8) relié de façon solidaire en rotation à la bague de réglage (5), lequel cylindre renferme pour sa part la bague de retenue (6).

7. Dispositif d'éclairage selon la revendication 6, **caractérisé en ce que** cylindre intérieur (8) de la bague de réglage (5) présente au moins une broche (19) dirigée radialement vers l'extérieur et la bague d'entraînement (12) présente au moins une rainure de fraisage (16) agencée en formant un pas de filetage, ces rainures de fraisage (16) étant traversées chacune par les broches (19) dirigées radialement vers l'extérieur de telle sorte qu'un réglage en hauteur de la bague d'entraînement (12) par rapport à la couronne perforée (7) fixe est occasionné au moyen d'un mouvement de rotation de la bague de réglage (5) par rapport à la couronne perforée (7) reliée de façon fixe à la bague de retenue (6) fixe.

8. Dispositif d'éclairage selon l'une quelconque des revendications précédentes, **caractérisé en ce que** l'alimentation en tension des éléments lumineux respectivement emboîtés dans les pattes support (15) s'effectue au moyen d'une platine annulaire, formée de préférence sous forme d'une bague à feuilles, laquelle platine est introduite dans une rainure annulaire, décrivant un cercle périphérique autour des pattes support (15), de la bague de retenue (6).

9. Dispositif d'éclairage selon l'une quelconque des revendications 6 à 8, **caractérisé en ce que** les éléments lumineux emboîtés dans la patte support (18) entourent l'axe (9) optique de l'appareil de façon concentrique et traversent alors au moins en partie la couronne perforée (7) et les trous (10) de la couronne perforée (7) sont dimensionnés de telle sorte que le réglage, occasionné par le réglage en hauteur de la bague d'entraînement (12), de l'angle d'attaque des éléments lumineux par rapport à l'axe optique et le basculement des éléments lumineux à l'intérieur des trous (10) de la couronne perforée (7) sont devenus possibles.

10. Dispositif d'éclairage selon l'une quelconque des revendications précédentes, **caractérisé en ce que** la bague de retenue (6) est recouverte par un capot (3)sur le côté tourné vers le tube, le capot (3) fermant le dispositif d'éclairage (1) côté extérieur sur le côté tourné vers le tube.

11. Dispositif d'éclairage selon la revendication 10, **caractérisé en ce que** le capot (3) est relié de façon amovible au moyen d'au moins un assemblage vissé à la bague de retenue (6).

12. Dispositif d'éclairage selon la revendication 10 ou 11, **caractérisé en ce que** le capot (3) présente au moins un passage (21) pour un raccordement électrique de la platine annulaire disposée à l'intérieur et/ou de l'agencement d'un élément de montage relié également à la platine annulaire.

13. Dispositif d'éclairage selon l'une quelconque des revendications précédentes 6 à 12, **caractérisé en ce que** la bague de réglage est dotée d'un trou oblong (17) dans la zone d'un cône de transition (20) avec le cylindre intérieur (8), la longueur du trou oblong (17) et la longueur de l'arrivée de courant pour la platine annulaire étant dimensionnées de telle sorte que, du fait du mouvement de rotation de la bague de réglage (5), une interruption de l'arrivée de courant à la platine annulaire intérieure est exclue.

14. Dispositif d'éclairage selon l'une quelconque ou plusieurs des revendications précédentes, **caractérisé en ce que** de préférence des LED blanches et/ou des LED jaunes sont emboîtées dans les pattes support (15) en tant qu'éléments lumineux.

15. Dispositif d'éclairage selon la revendication 14, **caractérisé en ce que** les LED sont fixées chacune au moyen de liaisons emboîtées, de préférence collées.

16. Dispositif d'éclairage selon la revendication 14 ou 15, **caractérisé en ce qu'**un élément de commande est attribué aux éléments lumineux et/ou est disposé sur la platine annulaire, cet élément de commande activant les LED et la couleur et l'intensité de la lumière émise au moyen du dispositif d'éclairage (1) pouvant être commandées et/ou réglées par l'élément de commande par la variation de l'intensité du courant et/ou la connexion et la déconnexion de LED sélectionnées.

17. Dispositif d'éclairage selon l'une quelconque des revendications 14 à 16, **caractérisé en ce que** les LED sont exploitées avec une fraction de l'intensité de courant maximale autorisée.

18. Dispositif d'éclairage selon l'une quelconque ou plusieurs des revendications précédentes, **caractérisé en ce qu'**un entraînement par moteur électrique, agissant sur la bague de réglage (5), pour la concentration par moteur de la lumière envoyée sur l'objet est attribué au dispositif d'éclairage (1).
